# EUROPEAN PATENT SPECIFICATION

(11) **EP 1 600 942 B1**
(45) Date of publication and mention of the grant of the patent: **18.11.2009**
(21) Application number: 04012134.5
(22) Date of filing: 21.05.2004
(51) Int. Cl.: G10L 13/08, G10L 15/06

(54) **Automatic word pronunciation generation for speech recognition**
Automatische Erzeugung einer Wortaussprache für die Spracherkennung
Génération automatique de la prononciation d'un mot pour la reconnaissance vocale

(43) Date of publication of application: 30.11.2005
(73) Proprietor: Harman Becker Automotive Systems GmbH, 76307 Karlsbad (DE)
(72) Inventor: Schulz, Matthias, 89198 Westerstetten (DE); Gerl, Franz, 89233 Neu-Ulm (DE); Schwarz, Markus, 89075 Ulm (DE); Kosmala, Andreas, 88471 Laupheim (DE); Jeschke, Bärbel, 89173 Lonsee (DE)
(74) Representative: Grünecker, Kinkeldey, Stockmair & Schwanhäusser Anwaltssozietät

(56) References cited:
- EP-A- 0 735 736
- EP-A- 1 220 200
- EP-A1- 0 564 162
- HAIN H: "Ein hybrider Ansatz zur Graphem-Phonem-Konvertierung unter Verwendung eines Lexikons und eines neuronalen Netzes" ELEKTRONISCHE SPRACHSIGNALVERARBEITUNG KONFERENZ, XX, XX, 4 September 2000 (2000-09-04), pages 160-167, XP002223265
- LAMMENS J M G ED - LAVER J ET AL LAVER J ET AL: "A LEXICON-BASED GRAPHEME-TO-PHONEME CONVERSION SYSTEM" EUROPEAN CONFERENCE ON SPEECH TECHNOLOGY. EDINBURGH, SEPTEMBER 1987, EDINBURGH, CEP CONSULTANTS, GB, vol. VOL. 1 CONF. 1, 1 September 1987 (1987-09-01), pages 281-284, XP000010730
- DIVAY M ED - ACOUSTICAL SOCIETY OF JAPAN: "A WRITTEN TEXT PROCESSING EXPERT SYSTEM FOR TEXT TO PHONEME CONVERSION" PROCEEDINGS OF THE INTERNATIONAL CONFERENCE ON SPOKEN LANGUAGE PROCESSING (ICSLP). KOBE, NOV. 18 -22, 1990, TOKYO, ASJ, JP, vol. VOL. 2, 18 November 1990 (1990-11-18), pages 853-856, XP000506904
- TRANCOSO I ET AL: "ON THE PRONUNCIATION MODE OF ACRONYMS IN SEVERAL EUROPEAN LANGUAGES" 5TH EUROPEAN CONFERENCE ON SPEECH COMMUNICATION AND TECHNOLOGY. EUROSPEECH '97. RHODES, GREECE, SEPT. 22 - 25, 1997, EUROPEAN CONFERENCE ON SPEECH COMMUNICATION AND TECHNOLOGY. (EUROSPEECH), GRENOBLE : ESCA, FR, vol. VOL. 2 OF 5, 22 September 1997 (1997-09-22), pages 573-576, XP001003959

## Description

The invention is directed to a speech recognition system a computer program product and to a method for automatically generating a vocabulary for a speech recognizer.

Applications for speech recognition systems can be found in many different fields. For example, speech recognition systems can be used to generate texts. In this case, a text is spoken (dictated) by a user and transcribed into written text by the speech recognition system.

In many other fields, speech dialog systems are used to provide a comfortable and natural interaction between a human user and a machine. Depending on the device the user wants to interact with, a speech dialog system can be used to enable the user to get information, to order something or control the device in some other ways. For example, a speech dialog system can be employed in a car to allow the user control of different devices such as a mobile phone, car radio, navigation system and/or air condition system.

There are different types of speech recognizers that can be utilized. For example, the speech recognizer can be an isolated word recognizer or a compound word recognizer. In the case of the first one, a user has to separate subsequent input words by sufficiently long pauses such that the system can determine the beginning and the end of the word. In the case of the latter, on the other hand, the beginning and end of words are detected by the compound word recognizer itself that allows the user to speak in a more natural way.

A speech recognizer is based on the principle that a speech input is compared with previously stored speech patterns of a dictionary. If an input word is "sufficiently" similar (according to a given criterion or distance measure) to a stored speech pattern, this word is recognized accordingly. Speech recognition algorithms can be based on different methods such as template matching, Hidden Markov Models (HMM) and/or artificial neural networks.

In many different applications, speech recognition systems are used as embedded systems in the context of other devices being connected thereto. Typical examples for such embedded systems are mobile phones, PDA's, or car entertainment and control systems comprising a car radio/CD player and a navigation system.

Particularly in the case of embedded systems, the CPU power and memory provided for the speech recognition part is limited. On the other hand, in different applications, a large vocabulary and computing power is necessary to recognize different proper names. This is the case, for example, if a speech recognizer is used to access an entry of a telephone directory of a mobile phone and initiate calling only via speech commands, or when a car radio is to be controlled by selecting radio stations by speaking their names.

H. Hain "Ein hybrider Ansatz zur Graphem-Phonem-Konvertierung unter Verwendung eines Lexikons und eines neuronalen Netzes", Elektronische Sprachsignalverarbeitung Konferenz, 2000, pages 160 - 267 discloses a hybrid method being used in a text-to-speech system using a pronounciation dictionary. According to the disclosed method, a word is decomposed into parts of a specific minimum length out of the pronunciation dictionary. The transcriptions of these parts are taken and concatenated. Any gaps are closed via a neural network.

EP 0 735 736 discloses a method for automatic speech recognition of arbitrary spoken words. If no speaker-dependent template is established for a particular user, a request is made for supplemental data, namely a digitally stored representation of the user's name. The text of the name is processed by a TTS system so that a phoneme transcription of the text is generated and stored as a speaker-independent template.

EP 0 564 166 discloses an apparatus and a method for recording data in a speech recognition system. The method responds to entered data by generating a string of phonetic transcriptions from the entered data. The data and generated phonetic transcription string associated therewith is recorded in a vocabulary lexicon of the speech recognition system.

In view of this, it is the problem underlying the invention to provide a speech recognition system, a computer program product and a method that allows to operate a speech recognizer with reduced memory and computing power requirements.

This problem is solved by the method according to claim 1, a computer program product according to claim 11 and the speech recognition system according to claim 12.

The method of claim 1 comprises the steps of :
a) automatically requesting digital word data,
b) receiving digital word data, in particular, name data,
c) automatically searching for a word entry in a predetermined dictionary matching at least part of the received word data, wherein the dictionary comprises a phonetic transcription for each word entry,
d) automatically phonetically transcribing each part of the received word data for which no matching word entry was determined,
e) storing each phonetically transcribed part and the corresponding part of the received word data in a memory being accessible by the speech recognizer,
wherein step c) comprises decomposing the word data into data fragments according to predetermined categories and searching for a fragment entry in the dictionary matching a data fragment or matching a sequence of data fragments, and wherein step d) comprises phonetically transcribing each data fragment for which no matching fragment entry was determined.

Here and in the following, the term "word" or "word data" denotes a sequence of characters wherein the term "character" comprises letters, numbers (digits) and special characters such as a dash, a blank, or a dot. Different alphanumeric characters can be separated by a blank, for example. The word data are received in digital form. Phonetically transcribing a word or a part of a word results in a speech pattern corresponding to how the word or part of a word is pronounced.

Compared to the case of prior art, this method enables to perform speech recognition without requiring to store a large dictionary comprising a huge number of entries covering all possible speech inputs in advance. The method allows to dynamically generate a vocabulary for a speech recognizer upon receipt of corresponding word data. In this way, the speech patterns for the speech recognizer are much better adapted to current conditions and requirements of the speech recognizer and its user during operation. In particular, if word data is received, it is checked whether the predetermined dictionary already comprises entries matching the whole received word data or parts thereof. If this is the case, a corresponding phonetic transcription of the word or parts thereof is already present. If not, however, the remaining parts of the received word data (which can also be all of the received word data) are phonetically transcribed such that corresponding speech patterns are obtained.

Step c) can comprise decomposing the word data into data fragments according to predetermined categories and searching for a fragment entry in the dictionary matching a data fragment or matching a sequence of data fragments, and step d) can comprise phonetically transcribing each data fragment for which no matching fragment entry was determined.

A data fragment consists of one character or is a sequence (string) of several characters (such as letters, numbers or special characters). A fragment entry of the dictionary can match a single data fragment or a sequence of data fragments of the word data, wherein the data fragments of such a sequence need not belong to the same category. It is possible to only search a part of the the dictionary corresponding to the category of the data fragment for which a matching fragment entry is to be determined. Thus, a dictionary can be provided in which each entry is associated to a predetermined category. In other words, the dictionary's entries can be categorized such that the dictionary comprises sub-dictionaries the entries of which belong to a common predetermined category, respectively. This reduces the required computing power and computing time since, for each data fragment, only parts of the dictionary corresponding to the category of the data fragments are to be searched.

The decomposing step can comprise decomposing the word data into data fragments solely consisting of letters, data fragments solely consisting of numbers, and/or data fragments consisting solely of special characters.

With these categories, letter fragments, number fragments, and special character fragments are obtained, each fragment consisting of one character or a sequence of characters all belonging to only one of these categories, respectively. Such a categorization is particularly useful in the context of address books or radio stations, since, in these cases, the corresponding word data usually comprises both letters and numbers.

A data fragment can consist of a string of characters appearing successively in the word data string. The characters of a data fragment, however, can be separated by a blank, a dash or another special character. Preferably, word data comprising two sequences of alphanumeric characters being separated by at least one special character can be decomposed into two fragments each corresponding to a sequence of alphanumeric characters and into a fragment consisting of the at least one special character. Alphanumeric characters are either letters or numbers. For example, if two sequences of letters of the word data are separated by a blank, two fragments are formed, each corresponding to one of the two letter fragments; a third fragment consists of the blank. Since in many cases, sequences of alphanumeric characters of the word data being separated by a dash or a blank may constitute separate entities (such as first name and family name), this yields an advantageous decomposition of the word data for further processing. It is possible to perform additional decompositions according to other categories (letter category, number category, for example); and the order of the decompositions can also be exchanged.

Step d) can comprise determining according to a predetermined criterion whether to phonetically transcribe a part of the received word data in spelled form, in pronounced form, or in composed spelled and pronounced form.

Spelled form yields a phonetic transcription in which each character of the fragment is spelled, whereas in pronounced from, a sequence of characters is pronounced or enunciated as a whole word composed of the characters. In composed form, a part of the data fragment is spelled and another part is pronounced.

The predetermined criterion may depend on the length of the data fragment (number of characters), neighboring fragments, upper and lower case characters and/or the appearance of consonants and vowels.

In particular, each letter of a part of the received word data solely consisting of consonants can be transcribed in spelled form. This yields a phonetic transcription of the letter sequence of a data fragment that most likely would correspond to the pronunciation, i.e. spelling, of the data fragment by a speaker.

Step a) can comprise receiving digital word data via Radio Data System (RDS) or Radio Broadcast Data System (RBDS).

RDS or RBDS allows to also transmit digital data (such as the name of the radio station or other information) in addition to the audio signal itself. Hence, this method can be advantageously used for a speech recognizer for a radio, e.g. a car radio, in particular, for controlling a radio via speech commands. Since the radio signals of RDS or RBDS also comprise digital word data, these word data are preferably used to generate a corresponding vocabulary for the speech recognizer.

Step a) can be preceded by automatically requesting digital word data. For example, the requesting step can comprise initiating scanning a radio frequency band and searching for receivable radio stations. In this way, the dynamically generated vocabulary for a speech recognizer to control a radio is always adapted to current circumstances, namely the receivable radio stations; a vocabulary obtained in this way comprises the necessary data that can currently be used.

Step b) can comprise uploading word data from a name database, in particular, an address book database or a telephone directory database. In this way, the name database comprising a set of proper names allows to specifically enlarge the vocabulary for a speech recognizer such that these proper names have an increased recognition probability by the speech recognizer. Other name databases are possible as well; for example, a name database can comprise a list of the names of radio stations.

In the above-described method, a dictionary can be used that further comprises a synonym and/or an abbreviation and/or at least two phonetic transcriptions for at least one of the word entries.

In this way, a user has the possibility to input a speech command in different ways. For example, the user can enunciate a term as a whole or use its abbreviation; if both are in the dictionary, both alternatives would be recognized. In some cases, it could also be possible that a term can be pronounced in different ways, for example, using an English or a German pronunciation; also these different pronunciations would be recognized if both phonetic transcriptions are part of the dictionary.

The above-described method can further comprise the step of providing the speech recognizer with each phonetically transcribed part and the corresponding part of the received word data. Thus, the vocabulary of the speech recognizer is enlarged and the functionality of the speech recognizer improved.

Steps c) and d) can be repeated according to a predetermined criterion, in particular, after predetermined time intervals and/or each time word data is received during operating time of the speech recognizer. Also the step of providing the speech recognizer with each phonetically transcribed part can be repeated according to the predetermined criterion.

This allows to regularly update the vocabulary. For example, in case of receiving digital word data via RDS or RBDS, the steps can be repeated each time a new radio station is receivable and/or each time a radio station is no longer receivable. Thus, the above described methods are particularly useful for a speech recognizer in a vehicular cabin.

The term "operating time" designates the time in which the speech recognizer can be used (even if a push-to-talk (PTT) key is still to be pressed) and not only the time during which the speech recognizer is active, i.e. is actually processing speech input after a PTT key was pressed.

The invention also provides a computer program product comprising one or more computer readable media having computer-executable instructions for performing the steps of one of the previously described methods.

The invention also provides a speech recognition system according to claim 12.

With such a speech recognition system, the above-described methods can be performed in an advantageous way. In particular, the vocabulary for the speech recognizer can be dynamically generated and updated. It is to be understood that the different parts of the speech recognition system can be arranged in different possible ways. For example, the memory in which the predetermined dictionary is stored can be provided as a separate entity, or the speech recognizer can comprise this memory.

The search means can be configured to decompose the word data into data fragments according to predetermined categories and to search for a fragment entry in the dictionary matching a data fragment or matching a sequence of data fragments, and the transcription means can be configured to phonetically transcribe each data fragment for which no matching fragment entry was determined.

The search means can be configured to decompose the word data into data fragments solely consisting of letters, data fragments solely consisting of numbers, and/or data fragments solely consisting of special characters.

The search means can be configured such that word data comprising two sequences of alphanumeric characters being separated by at least one special character can be decomposed into two fragments each corresponding to a sequence of alphanumeric characters and into a fragment consisting of the at least one special character.

The transcription means can be configured to determine according to a predetermined criterion whether to phonetically transcribe a part of the received word data in spelled form, in pronounced form, or in composed spelled and pronounced form.

The transcription means can be configured to transcribe each letter of a part of the received word data solely consisting of consonants in spelled form.

The interface can be configured to receive digital word data via Radio Data System (RDS) or Radio Broadcast Data System (RBDS).

The interface can be configured to automatically request digital word data.

The interface can be configured to upload word data from a name database, in particular, an address book database or a telephone directory database.

The dictionary can further comprise a synonym and/or an abbreviation and/or at least two phonetic transcriptions for at least one of the word entries.

The transcription means can be configured to store each phonetically transcribed part and the corresponding part of the received word data in a memory being accessible by the speech recognizer.

The search means and the transcription means can be configured to repeat searching and transcribing according to a predetermined criterion, in particular, after predetermined time intervals and/or each time word data is received during operating time of the speech recognizer.

Further features and advantages will be described in the following with respect to the drawings.
- Fig. 1: illustrates an example of a speech recognition system for controlling a radio;
- Fig. 2: illustrates the course of action of an example of a method for generating a vocabulary for a speech recognizer;
- Fig. 3: illustrates the course of action of an example of generating a radio station vocabulary for a speech recognizer;
- Fig. 4: illustrates an example of a list of radio stations; and
- Fig. 5: illustrates an example of dictionary entries for radio stations.

While the present invention is described in the following with respect to different embodiments and figures, it should be understood that the following detailed description as well as the drawings are not intended to limit the present invention to the particular illustrative embodiments disclosed, but rather that the described illustrative embodiments merely exemplify the various aspects of the present invention, the scope of which is defined by the appended claims.

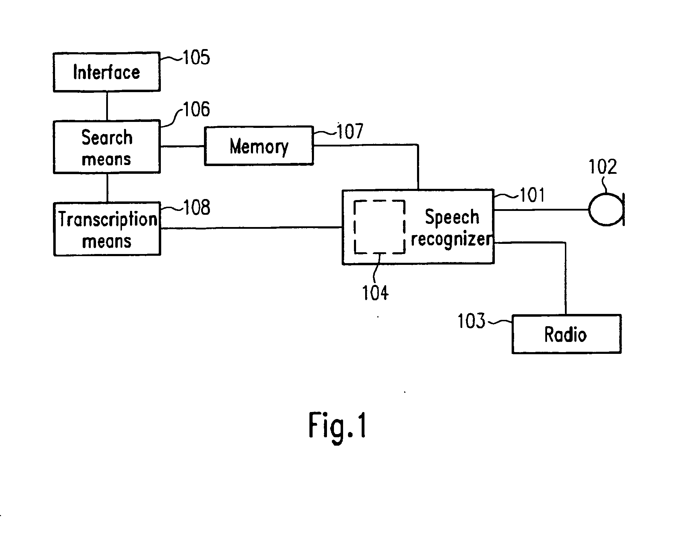

In Fig. 1, the arrangement of different components of an example of a speech recognition system is shown. In particular, the speech recognition system comprises a speech recognizer 101 that is responsible for recognizing a speech input. Such a speech input is received by the speech recognizer 101 via a microphone 102.

In general, the speech recognizer can be connected to one microphone or to several microphones, particularly to a microphone array (not shown). If a microphone array were used, the signals emanating from such a microphone array would be processed by a beamformer to obtain a combined signal that has a specific directivity. This is particularly useful if the speech recognition system is to be used in a noisy environment such as in a vehicular cabin.

The speech recognition system as illustrated in Fig. 1 is intended to control a radio 103 via speech commands. The speech recognizer can be an isolated word recognizer or a compound word recognizer. Its recognition algorithm may be based on template matching, Hidden Markov Models and/or artificial neuron networks, for example. In any of these cases, the speech recognizer 101 compares a speech input from a user with speech patterns that have been previously stored in a memory 104. If the speech input is sufficiently closed (according to a predetermined distance measure) to one of the stored speech patterns, the speech input is recognized as the speech pattern. In memory 104, a standard vocabulary is stored for controlling the functionality of connected devices such as the radio 103. However, other devices such as a navigation system or an air conditioning can also be connected to the speech recognizer.

For example, a user could speak the words "volume" and "up". If speech patterns corresponding to these two words are present in the speech recognizer, the command "volume up" would be recognized and a corresponding electronic signal be sent from the speech recognizer to the radio 103 so as to increase the volume.

In the case of the radio, particularly a car radio, one would also like to choose a radio station via corresponding speech command. However, the names of radio stations are often specific proper names that do not form part of a standard vocabulary of a speech recognizer. This is particularly due to limited memory.

Because of that, an interface 105 is provided which serves to receive the names of different radio stations in digital form. The interface is configured to receive the data via a suitable network, for example, from a radio station in wireless form.

In particular, the interface 105 can be configured to receive digital data via Radio Data System (RDS) or Radio Broadcast Data System (RBDS). According to these systems, signals received from a radio station not only contain audio data, but also additional information. For example, the station's name can be simultaneously transmitted in digital form. Many RDS or RBDS receivers are capable of presenting the station's name on a display.

In the present case, this name information is used to provide additional vocabulary data for the speech recognizer. To achieve this, a search means 106 is connected to the interface 105. As will be described in more detail below, the search means 106 is responsible to determine whether at least parts of a name received by the interface 105 are present in a predetermined dictionary that has been stored in memory 107.

The memory 107 is not only connected to the search means 106, but also to the speech recognizer 101. In particular, the speech recognizer has also access to the dictionary stored in memory 107. In the example shown in Fig. 1, the memory 107 is shown as an additional part outside the speech recognizer. Other configurations, however, are also possible; for example, the memory could be part of the search means or of the speech recognizer.

Furthermore, a transcription means 108 is connected to the search means 106 and to the speech recognizer 101. If some or all parts of incoming name data were not found in the dictionary stored in memory 107, these parts are passed to the transcription means 108 where they are phonetically transcribed. The transcription means may also be configured to determined which kind of phonetic transcription is performed (spelled form, pronounced form, or composed spelled and pronounced form).

Each phonetic transcription is passed to the speech recognizer 101, where it is stored in memory 104 so that it can be used by the speech recognizer. In this way, additional vocabulary is dynamically generated for the speech recognizer.

Also in this case, the additional vocabulary can be stored in other ways. For example, the transcription means 108 can also comprise a memory where this additional vocabulary is to be stored. Alternatively, the phonetically transcribed parts can be stored in memory 107 in addition to the dictionary already present. In this case, the transcription means 108 need not be directly connected to the speech recognizer 101; it has to be connected to the memory 107, either directly or via the search means 106, for example.

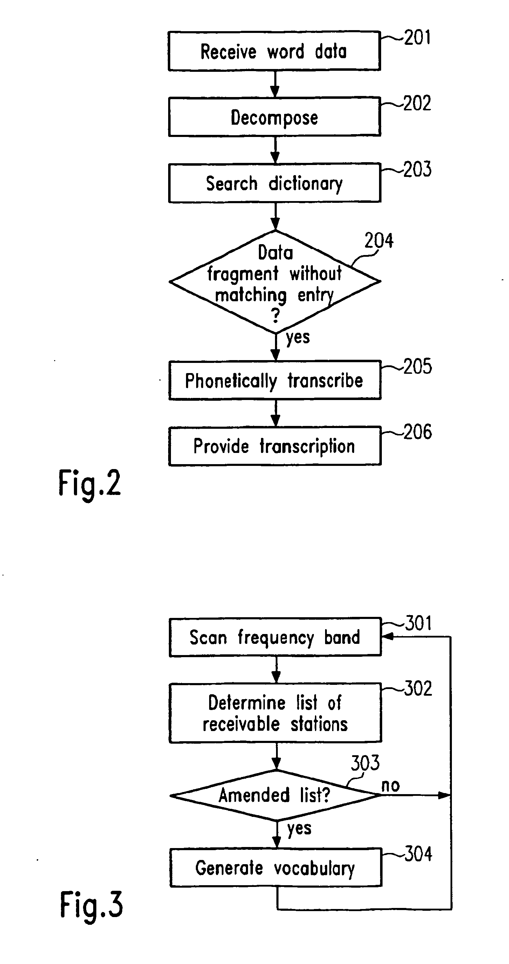

In the following, an example of how to generate a vocabulary will be described with reference to Fig. 2. The steps of the method will be explained along the lines of the examples of a speech recognition system for controlling a radio as illustrated in Fig. 1. It is to be understood, however, that the steps of the method apply to other examples such as mobile phones as well.

In a first step 201, digital word data is received. In the case of a speech recognition system for a radio, the word data are names of radio stations. However, if the method is used for a mobile phone, for example, the word data could comprise entries of an address book or a telephone directory.

As an example, the received word data may comprise "SWR 4 HN". This stands for the radio station "Südwestrundfunk 4 Heilbronn". When receiving the name of this radio station, the corresponding frequency on which these radio signals are transmitted is also known: It is the frequency of the signal with which the name information was received.

In the following step 202, the name data "SWR 4 HN" is decomposed according to predetermined categories, in the present example, according to the categories "letter" and "number". The string of characters can be analyzed as follows.

One starts with the first character which is "S" and belongs to the category "letter". The subsequent characters "W" and "R" belong to the same category. After these three letters, there is a blank followed by the character "4", which is a number. Therefore, the sequence of characters belonging to the same category, namely, the category "letters" is terminated and a first data fragment "SWR" is determined. The following blank constitutes a next fragment.

The number "4" is followed by a blank and, then, by the character "H", which is a letter. Hence, the sequence of characters belonging to the same category consists only of a single character, namely the number "4"; this is a further fragment, again followed by a blank resulting in the next fragment. After this, a last fragment consisting of the letters "H" and "N" is determined. As a result, the word data "SWR 4 HN" was decomposed into fragments "SWR", "4", and "HN" and into two special character fragments consisting of a blank, respectively.

Other variants of decomposing the name data is possible as well. For example, first, of all, the data can be decomposed in different parts that are separated from another by a blank or a special character such as a dash or a dot. After that, one can perform the decomposition into letters and numbers as described above. In the case of the above example "SWR 4 HN", decomposition into sequences of alphanumeric characters being separated by a blank would already yield the three fragments "SWR", "4" and "HN" and the two special character fragments. A further decomposition into letter fragments and number fragments would not modify this decomposition.

It is to be understood that the different steps of the decomposition can also be exchanged.

In the next step 203, a dictionary is searched to determine whether there are any entries matching one or a sequence of the data fragments. The dictionary can comprise the names or abbreviations of major radio stations. For each data fragment or possibly for a sequence of data fragments, the dictionary is searched. The dictionary can also be decomposed into different sub-dictionaries each comprising entries belonging to a specific category. For example, a sub-dictionary can comprise only those entries consisting solely of letters and another sub-dictionary can only comprise entries consisting solely of numbers. Then, only the letter sub-dictionary would be searched with respect to letter data fragments and only the number sub-dictionary would be searched with regard to number data fragments. In this way, the processing time can be considerably reduced.

In the following step 204, it is checked whether there is any data fragment for which no matching fragment entry was found in the dictionary. If this is not the case, the method can be terminated since the complete name data is already present in the dictionary. As the dictionary comprises the phonetic transcription for each of its entries, the speech recognizer has all the necessary information for recognizing these fragments.

However, if there are one or several data fragments for which no matching entry has been found in the dictionary, the method proceeds with step 205. In this step, each of these data fragments is phonetically transcribed. This means, a speech pattern is generated corresponding to the pronunciation of the data fragment. For this, text to speech (TTS) synthesizers known in the art can be used. In this step, it is also decided according to a predetermined criterion what phonetic transcription is to be performed. For example, according to such a criterion, for data fragments consisting of less than a predetermined number of characters, a phonetic transcription in spelled form is always to be chosen. The criterion can also depend (additionally or alternatively) on the appearance upper and lower case characters, on neighboring (preceding or following) fragments, etc.

If a letter data fragment only consists of consonants, it is advantageous to phonetically transcribe this fragment in spelled form as well. In other words, the resulting phonetic pattern corresponds to spelling the letters of the data fragment. This is particularly useful for abbreviations not containing any vowels which would also be spelled by a user. However, in other cases, it might be useful to perform a composed phonetic transcription consisting of phonetic transcriptions in spelled and in pronounced form.

In the last step 206, the phonetic transcriptions and the corresponding word data fragments are provided to the speech recognizer, for example, by passing the phonetic transcription together with the corresponding data fragments to the memory of the speech recognizer and storing them in the memory. Thus, the vocabulary for speech recognition is extended.

Fig. 3 illustrates an example of how the word data to be received can be obtained in the case of a radio, particularly a car radio. According to the first step 301, the radio frequency band is scanned. This can be performed upon a corresponding request by a speech recognizer. During this scanning of the frequency band, all frequencies are determined at which radio signals are received.

In the following step 302, a list of receivable stations is determined. When scanning a frequency band, each time a frequency is encountered at which a radio signal is received, this frequency is stored together with the name of the corresponding radio station that is received as a digital signal together with the audio signal.

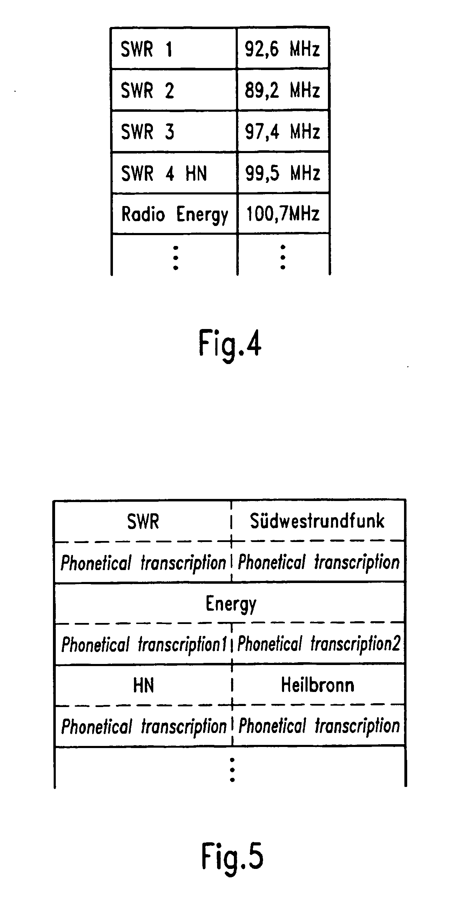

An example of a resulting list of receivable radio stations is shown in Fig. 4. The left column is the name of the radio station as received via RDS or RBDS and the right column lists the corresponding frequencies at which these radio stations can be received. It is to be understood that such a list can be stored in different ways.

In the next step 303, it is checked whether there is already a list of receivable radio stations present or whether the current list is amended with respect to a previously stored list of radio stations. The latter can happen in the case of a car radio, for example, when the driver is moving between different transmitter coverage areas, some radio stations may become receivable at a certain time whereas other radio stations may no longer be receivable.

If there is no previously stored radio station list present or if the list of receivable radio stations has been changed, the method proceeds to step 304 in which vocabulary corresponding to the list of radio stations is generated. This would be done according to the method illustrated in Fig. 2. Otherwise, the method returns to step 301.

These steps can be performed continuously or regularly after predetermined time intervals.

Fig. 5 illustrates a dictionary that is searched in step 203 of the method shown in Fig. 2. To each fragment entry of the dictionary, a corresponding phonetic transcription is associated. For example, one entry can read "SWR". This entry is an abbreviation. For this entry, the dictionary also comprises the corresponding full word "Südwestrundfunk" together with its phonetic transcription. If there is a radio station called "Radio Energy", the dictionary could also comprise the fragment "Energy". For this entry, two different phonetic transcriptions are present, the first phonetic transcription corresponding to the (correct) English pronunciation and a second phonetic transcription corresponding to a German pronunciation of the word "energy". Thus, the term "energy" can be recognized even if a speaker uses a German pronunciation.

In the case of radio stations that are identified by their frequency, the dictionary can also comprise entries corresponding to different ways to pronounce or spell this frequency. For example, if a radio station is received at 94.3 MHz, the dictionary can comprise entries corresponding to "ninety-four dot three", "ninety-four three", "nine four three" etc. Therefore, a user may pronounce the "dot" or not; in both cases, the frequency is recognized.

In the foregoing, the method for generating a vocabulary for a speech recognizer was described in the context of a radio, in particular, a car radio. It is to be understood that this method can be used in other fields as well.

An example is the use of a speech recognizer for mobile phones. If a user wishes to control a mobile phone via speech commands, the speech recognizer has to recognize different proper names a user wishes to call. In such a case, a vocabulary can be generated based on an address book stored on the SIM card of the mobile phone, for example. In such a case, this address book database is uploaded, for example, when switching on the mobile phone, and the method according to Fig. 2 can be performed. In other words, the steps of this method are performed for the different entries of the address book. Also in this case, a dictionary can be provided already comprising some names and their pronunciations. Furthermore, the dictionary can also comprise synonyms, abbreviations and/or different pronunciations for some or all of the entries. For example, the entry "Dad" can be associated to "Father" and "Daddy".

Further modifications and variations of the present invention will be apparent to those skilled in the art in view of this description. Accordingly, the description is to be construed as illustrative only and is for the purpose of teaching those skilled in the art the general manner of carrying out the present invention as defined by the appended claims. It is to be understood that the forms of the invention as shown and described herein are to be taken as the presently preferred embodiments.

## Claims

1. Method for automatically generating a vocabulary for a speech recognizer, comprising the steps of:
a) automatically requesting digital word data,
b) receiving digital word data, in particular, name data,
c) automatically searching for a word entry in a predetermined dictionary matching at least part of the received word data, wherein the dictionary comprises a phonetic transcription for each word entry,
d) automatically phonetically transcribing each part of the received word data for which no matching word entry was determined,
e) storing each phonetically transcribed part and the corresponding part of the received word data in a memory being accessible by the speech recognizer,
wherein step c) comprises decomposing the word data into data fragments according to predetermined categories and searching for a fragment entry in the dictionary matching a data fragment or matching a sequence of data fragments, and wherein step d) comprises phonetically transcribing each data fragment for which no matching fragment entry was determined.

2. Method according to claim 1, wherein the decomposing step comprises decomposing the word data into data fragments solely consisting of letters, data fragments solely consisting of numbers, and/or data fragments solely consisting of special characters.

3. Method according to claim 1 or 2, wherein word data comprising two sequences of alphanumeric characters being separated by at least one special character are decomposed into two fragments each corresponding to a sequence of alphanumeric characters and into a fragment consisting of the at least one special character.

4. Method according to one of the preceding claims, wherein step d) comprises determining according to a predetermined criterion whether to phonetically transcribe a part of the received word data in spelled form, in pronounced form, or in composed spelled and pronounced form.

5. Method according to one of the preceding claims, wherein in step d), each letter of a part of the received word data solely consisting of consonants is transcribed in spelled form.

6. Method according to one of the preceding claims, wherein step b) comprises receiving digital word data via Radio Data System (RDS) or Radio Broadcast Data System (RBDS).

7. Method according to one of the preceding claims, wherein step b) comprises uploading word data from a name database, in particular, an address book database or a telephone directory database.

8. Method according to one of the preceding claims, wherein a dictionary is used that further comprises a synonym and/or an abbreviation and/or at least two phonetic transcriptions for at least one of the word entries.

9. Method according to one of the preceding claims, further comprising the step of providing the speech recognizer with each phonetically transcribed part and the corresponding part of the received word data.

10. Method according to one of the preceding claims, wherein steps c) and d) are repeated according to a predetermined criterion, in particular, after predetermined time intervals and/or each time word data is received during operating time of the speech recognizer.

11. Computer program product, comprising one or more computer readable media having computer-executable instructions adapted to perform the steps of the method of one of the preceding claims.

12. Speech recognition system, comprising:
a speech recognizer (101) for recognizing speech input,
an interface (105) configured to automatically request digital word data and to receive word data, in particular, name data,
a memory (107) in which a predetermined dictionary is stored, the dictionary comprising digital word entries and a phonetic transcription for each word entry,
search means (106) configured to automatically search for a word entry in the dictionary matching at least part of the received word data,
wherein the search means is configured to decompose the word data into data fragments according to predetermined categories and to search for a fragment entry in the dictionary matching a data fragment or matching a sequence of data fragments, and wherein the transcription means is configured to phonetically transcribe each data fragment for which no matching fragment entry was determined,
transcription means (108) configured to automatically phonetically transcribe each part of the received word data for which no matching word entry was determined, wherein the transcription means is configured to store each phonetically transcribed part and the corresponding part of the received word data in a memory being accessible by the speech recognizer.

13. Speech recognition system according to claim 12, wherein the search means is configured to decompose the word data into data fragments solely consisting of letters, data fragments solely consisting of numbers, and/or data fragments solely consisting of special characters.

14. Speech recognition system according to claim 12 or 13, wherein the search means is configured such that word data comprising two sequences of alphanumeric characters being separated by at least one special character are decomposed into two fragments each corresponding to a sequence of alphanumeric characters and into a fragment consisting of the at least one special character.

15. Speech recognition system according to one of the claims 12 - 14, wherein the transcription means is configured to determine according to a predetermined criterion whether to phonetically transcribe a part of the received word data in spelled form, in pronounced form, or in composed spelled and pronounced form.

16. Speech recognition system according to one of the claims 12 - 15, wherein the transcription means is configured to transcribe each letter of a part of the received word data solely consisting of consonants in spelled form.

17. Speech recognition system according to one of the claims 12 - 16, wherein the interface is configured to receive digital word data via Radio Data System (RDS) or Radio Broadcast Data System (RBDS).

18. Speech recognition system according to one of the claims 12 - 17, wherein the interface is configure to upload word data from a name database, in particular, an address book database or a telephone directory database.

19. Speech recognition system according to one of the claims 12 - 18, wherein the dictionary further comprises a synonym and/or an abbreviation and/or at least two phonetic transcriptions for at least one of the word entries.

20. Speech recognition system according to one of the claims 12 - 19, wherein the search means and the transcription means are configured to repeat searching and transcribing according to a predetermined criterion, in particular, after predetermined time intervals and/or each time word data is received during operating time of the speech recognizer.

## Patentansprüche

1. Verfahren zum automatischen Erzeugen eines Vokabulars für einen Spracherkenner, umfassend die Schritte:
a) automatisches Anfordern digitaler Wortdaten,
b) Empfangen digitaler Wortdaten, insbesondere Namensdaten,
c) automatisches Suchen nach einem Worteintrag in einem vorherbestimmten Wörterbuch, der wenigstens einem Teil der empfangenen Wortdaten entspricht, wobei das Wörterbuch für jeden Worteintrag eine phonetische Transkription umfasst,
d) automatisches phonetisches Transkribieren eines jeden Teils der empfangenen Wortdaten, für welchen kein entsprechender Worteintrag bestimmt worden ist,
e) Speichern eines jeden phonetisch transkribierten Teils und des entsprechenden Teils der empfangenen Wortdaten in einem Speicher, der für den Spracherkenner zugänglich ist,
wobei Schritt c) Zerlegen der Wortdaten in Datenfragmente gemäß vorherbestimmter Kategorien und Suchen nach einem Fragmenteintrag im Wörterbuch, der einem Datenfragment entspricht oder einer Sequenz von Datenfragmenten entspricht, umfasst, und wobei Schritt d) phonetisches Transkribieren eines jeden Datenfragments umfasst, für welches kein entsprechender Fragmenteintrag bestimmt wurde.

2. Verfahren nach Anspruch 1, wobei der Zerlegungsschritt Zerlegen der Wortdaten in Datenfragmente ausschließlich bestehend aus Buchstaben, Datenfragmente ausschließlich bestehend aus Zahlen und/oder Datenfragmente ausschließlich bestehend aus Sonderzeichen umfasst.

3. Verfahren nach Anspruch 1 oder 2, wobei Wortdaten, die zwei Sequenzen von alphanumerischen Zeichen umfassen, welche durch wenigstens ein Sonderzeichen getrennt sind, in zwei Fragmente, die jedes einer Sequenz von alphanumerischen Zeichen entspricht, und in ein Fragment bestehend aus dem wenigstens einem Sonderzeichen, zerlegt werden.

4. Verfahren nach einem der vorangegangenen Ansprüche, wobei Schritt d) Bestimmen gemäß eines vorherbestimmten Kriteriums, ob ein Teil der empfangenen Wortdaten in buchstabierter Form, in ausgesprochener Form, oder in zusammengesetzt buchstabierter und ausgesprochener Form phonetisch zu transkribieren ist, umfasst.

5. Verfahren nach einem der vorangegangenen Ansprüche, wobei in Schritt d) jeder Buchstabe eines Teils der empfangenen Wortdaten, der ausschließlich aus Konsonanten besteht, in buchstabierter Form transkribiert wird.

6. Verfahren nach einem der vorangegangenen Ansprüche, wobei Schritt b) Empfangen digitaler Wortdaten via Radio Data System (RDS) oder Radio Broadcast Data System (RBDS) umfasst.

7. Verfahren nach einem der vorangegangenen Ansprüche, wobei Schritt b) Hochladen von Wortdaten von einer Namensdatenbasis, insbesondere einer Adressbuchdatenbasis oder einer Telefonverzeichnisdatenbasis, umfasst.

8. Verfahren nach einem der vorangegangenen Ansprüche, wobei ein Wörterbuch verwendet wird, das außerdem ein Synonym und/oder eine Abkürzung und/oder wenigstens zwei phonetische Transkriptionen für wenigstens einen der Worteinträge umfasst.

9. Verfahren nach einem der vorangegangenen Ansprüche, außerdem umfassend den Schritt des Ausstattens des Sracherkenners mit jedem phonetisch transkribierten Teil und dem entsprechenden Teil der empfangenen Wortdaten.

10. Verfahren nach einem der vorangegangenen Ansprüche, wobei die Schritte c) und d) gemäß einem vorherbestimmten Kriterium wiederholt werden, insbesondere nach vorherbestimmten Zeitintervallen und/oder jedes mal wenn Wortdaten während der Betriebszeit des Spracherkenners empfangen werden.

11. Computerprogrammprodukt, umfassend ein oder mehrere computerlesbare Medien mit computer-ausführbaren Instruktionen, adaptiert das Verfahren nach einem der vorangegangenen Ansprüche auszuführen.

12. Spracherkennungssystem, umfassend:
einen Spracherkenner (101) zum Erkennen einer Spracheingabe;
eine Schnittstelle, die konfiguriert ist, automatisch digitale Wortdaten anzufordern und Wortdaten, insbesondere Namensdaten, zu empfangen,
einen Speicher (107) in dem ein vorherbestimmtes Wörterbuch gespeichert ist, wobei das Wörterbuch digitale Worteinträge und eine phonetische Transkription für jeden Worteintrag umfasst,
ein Suchmittel (106), das konfiguriert ist, automatisch nach einem Worteintrag im Wörterbuch zu suchen, der wenigstens einen Teil der empfangenen Wortdaten entspricht,
wobei das Suchmittel konfiguriert ist, die Wortdaten in Datenfragmente gemäß vorherbestimmter Kategorien zu zerlegen, und nach einem Fragmenteintrag im Wörterbuch zu suchen, der einem Datenfragment entspricht oder einer Sequenz von Datenfragmenten entspricht, und wobei das Transkriptionsmittel konfiguriert ist, jedes Datenfragment phonetisch zu transkribieren, für welches kein entsprechender Fragmenteintrag bestimmt wurde,
ein Transkriptionsmittel (108), das konfiguriert ist, automatisch jeden Teil der empfangenen Wortdaten, für welchen kein entsprechender Worteintrag bestimmt wurde, phonetisch zu transkribieren, wobei das Transkriptionsmittel konfiguriert ist, jeden phonetisch transkribierten Teil und den entsprechenden Teil der empfangenen Wortdaten in einem Speicher zu speichern, der für den Spracherkenner zugänglich ist.

13. Spracherkennungssystem nach Anspruch 12, wobei das Suchmittel konfiguriert ist, die Wortdaten in Datenfragmente ausschließlich bestehend aus Buchstaben, Datenfragmente ausschließlich bestehend aus Zahlen und/oder Datenfragmente ausschließlich bestehend aus Sonderzeichen zu zerlegen.

14. Spracherkennungssystem nach Anspruch 12 oder 13, wobei das Suchmittel derart konfiguriert ist, dass Wortdaten, die zwei Sequenzen von alphanumerischen Zeichen umfassen, welche durch wenigstens ein Sonderzeichen getrennt sind, in zwei Fragmente, die jedes einer Sequenz von alphanumerischen Zeichen entspricht, und in ein Fragment bestehend aus dem wenigstens einem Sonderzeichen zerlegt werden.

15. Spracherkennungssystem nach einem der Ansprüche 12 - 14, wobei das Transkriptionsmittel konfiguriert ist, gemäß eines vorherbestimmten Kriteriums zu bestimmen, ob ein Teil der empfangenen Wortdaten in buchstabierter Form, in ausgesprochener Form, oder in zusammengesetzt buchstabierter und ausgesprochener Form phonetisch zu transkribieren ist.

16. Spracherkennungssystem nach einem der Ansprüche 12 - 15, wobei das Transkriptionsmittel konfiguriert ist, jeden Buchstaben eines Teils der empfangenen Wortdaten, der ausschließlich aus Konsonanten besteht, in buchstabierter Form zu transkribieren.

17. Spracherkennungssystem nach einem der Ansprüche 12 - 16, wobei die Schnittstelle konfiguriert ist, digitale Wortdaten via Radio Data System (RDS) oder Radio Broadcast Data System (RBDS) zu empfangen.

18. Spracherkennungssystem nach einem der Ansprüche 12 - 17, wobei die Schnittstelle konfiguriert ist, Wortdaten von einer Namensdatenbasis, insbesondere einer Adressbuchdatenbasis oder einer Telefonverzeichnisdatenbasis, hochzuladen.

19. Spracherkennungssystem nach einem der Ansprüche 12 - 18, wobei das Wörterbuch außerdem ein Synonym und/oder eine Abkürzung und/oder wenigstens zwei phonetische Transkriptionen für wenigstens einen der Worteinträge umfasst.

20. Spracherkennungssystem nach einem der Ansprüche 12 - 19, wobei das Suchmittel und das Transkriptionsmittel konfiguriert sind, Suchen und Transkribieren gemäß einem vorherbestimmten Kriterium zu wiederholen, insbesondere nach vorherbestimmten Zeitintervallen und/oder jedes mal wenn Wortdaten während der Betriebszeit des Spracherkenners empfangen werden.

## Revendications

1. Procédé de génération automatique d'un vocabulaire pour reconnaisseur de parole, comprenant les étapes de :
a) demande automatique de données de mot numérique,
b) réception de données de mot numérique, en particulier de données de nom,
c) recherche automatique d'une entrée de mot dans un dictionnaire prédéterminé correspondant à au moins une part des données de mot reçues, où le dictionnaire comprend une transcription phonétique pour chaque entrée de mot,
d) transcription phonétique automatique de chaque part des données de mot reçues pour laquelle aucune entrée de mot correspondante n'a été déterminée,
e) mémorisation de chaque part transcrite phonétiquement et de chaque part correspondante de données de mot reçues dans une mémoire accessible par le reconnaisseur de parole,
où l'étape c) comprend la décomposition des données de mot en fragments de données selon des catégories prédéterminées et la recherche d'une entrée de fragment dans le dictionnaire correspondant à un fragment de données ou correspondant à une séquence de fragments de données, et où l'étape d) comprend la transcription phonétique de chaque fragment de données pour lequel aucune entrée de fragment correspondante n'a été déterminée.

2. Procédé selon la revendication 1, où l'étape de décomposition comprend la décomposition des données de mot en fragments de données consistant seulement en lettres, en fragments de données consistant seulement en nombres, et/ou en fragments de données consistant seulement en caractères spéciaux.

3. Procédé selon la revendication 1 ou 2, dans lequel les données de mot comprenant deux séquences de caractères alphanumériques séparées par au moins un caractère spécial sont décomposées en deux fragments correspondant chacun à une séquence de caractères alphanumériques et en un fragment consistant en le, au moins un, caractère spécial.

4. Procédé selon l'une des revendications précédentes, dans lequel l'étape d) comprend la détermination selon un critère prédéterminé s'il faut transcrire phonétiquement une partie des données de mot reçues sous forme épelée, sous forme prononcée, ou sous forme composée épelée et prononcée.

5. Procédé selon l'une des revendications précédentes, où dans l'étape d), chaque lettre d'une part des données de mot reçues consistant seulement en consonnes est transcrite sous forme épelée.

6. Procédé selon l'une des revendications précédentes, où l'étape b) comprend la réception de données de mot numérique via un système de données radio RDS (Radio Data System) ou un système de données de radiodiffusion RBDS (Radio Broadcast Data System).

7. Procédé selon l'une des revendications précédentes, où l'étape b) comprend le téléchargement des données de mot à partir d'une base de données de noms, en particulier, une base de données d'un carnet d'adresses ou une base de données d'un répertoire téléphonique.

8. Procédé selon l'une des revendications précédentes, où un dictionnaire est utilisé qui comprend en outre un synonyme et/ou une abréviation et/ou au moins deux transcriptions phonétiques pour au moins l'une des entrées de mot.

9. Procédé selon l'une des revendications précédentes, comprenant en outre l'étape de mise à disposition du reconnaisseur de parole avec chaque part transcrite phonétiquement et la part correspondante des données de mot reçues.

10. Procédé selon l'une des revendications précédentes, où les étapes c) et d) sont répétées selon un critère prédéterminé, en particulier, après des intervalles de temps prédéterminés et/ou à chaque fois des données de mot sont reçues pendant le temps d'exploitation du reconnaisseur de parole.

11. Programme informatique, comprenant un ou plusieurs médias informatiques lisibles ayant des instructions exécutables par l'ordinateur adapté à l'exécution du procédé de l'une des revendications précédentes.

12. Système de reconnaissance de la parole, comprenant :
un reconnaisseur de la parole (101) pour la reconnaissance d'une entrée vocale,
une interface (105) configurée pour demander automatiquement des données de mot numérique et pour recevoir des données de mot, en particulier, des données de noms, une mémoire (107) dans laquelle un dictionnaire prédéterminé est enregistré, le dictionnaire comprenant des entrées de mot numérique et une transcription phonétique pour chaque entrée de mot,
un moyen de recherche (106) configuré pour rechercher automatiquement une entrée de mot dans le dictionnaire correspondant à au moins une part des données de mot reçues,
où le moyen de recherche est configuré pour décomposer les données de mot en fragments de données selon des catégories prédéterminées et pour rechercher une entrée de fragment dans le dictionnaire correspondant à un fragment de données ou correspondant à une séquence de fragments de données, et où le moyen de transcription est configuré pour transcrire phonétiquement chacun des fragments de données pour lequel aucune entrée de fragment correspondante n'a été déterminée,
un moyen de transcription (108) configuré pour transcrire automatiquement phonétiquement chaque part de données de mot reçues pour laquelle aucune entrée de mot correspondante n'a été déterminée, où le moyen de transcription est configuré pour mémoriser chaque part transcrite phonétiquement et la part correspondante des données de mot reçues dans une mémoire accessible par le reconnaisseur de parole.

13. Système de reconnaissance de la parole selon la revendication 12, où le moyen de recherche est configuré pour décomposer les données de mot en fragments de données consistant seulement en lettres, en fragments de données consistant seulement en nombres, et/ou en fragments de données consistant seulement en caractères spéciaux.

14. Système de reconnaissance de la parole selon les revendications 12 ou 13, où le moyen de recherche est configuré de telle manière que les données de mot comprenant deux séquences de caractères alphanumériques étant séparées par au moins un caractère spécial sont décomposées en deux fragments correspondant chacun à une séquence de caractères alphanumériques et en un fragment consistant en le, au moins un, caractère spécial.

15. Système de reconnaissance de la parole selon l'une des revendications 12 à 14, où le moyen de transcription est configuré pour déterminer selon un critère prédéterminé s'il faut transcrire phonétiquement une part des données de mot reçues sous forme épelée, sous forme prononcée, ou sous forme composée épelée et prononcée.

16. Système de reconnaissance de la parole selon l'une des revendications 12 à 15, où le moyen de transcription est configuré pour transcrire chaque lettre d'une part des données de mot reçues consistant seulement en consonnes sous forme épelée.

17. Système de reconnaissance de la parole selon l'une des revendications 12 à 16, où l'interface est configurée pour recevoir des données de mot numériques via un système de données radio RDS (Radio Data System) ou un système de données de radiodiffusion RBDS (Radio Broadcast Data System).

18. Système de reconnaissance de la parole selon l'une des revendications 12 à 17, où l'interface est configurée pour télécharger des données de mot à partir d'une base de données de noms, en particulier, une base de données de carnet d'adresses ou une base de données de répertoire téléphonique.

19. Système de reconnaissance de la parole selon l'une des revendications 12 à 18, où le dictionnaire comprend en outre un synonyme et/ou une abréviation et/ou au moins deux transcriptions phonétiques pour au moins l'une des entrées de mot.

20. Système de reconnaissance de la parole selon l'une des revendications 12 à 19, où le moyen de recherche et le moyen de transcription sont configurés pour répéter la recherche et la transcription selon un critère prédéterminé, en particulier, après des intervalles de temps prédéterminés et/ou à chaque fois que des données de mot sont reçues pendant le temps d'exploitation du reconnaisseur de parole.
